# EUROPEAN PATENT APPLICATION

(11) **EP 4 262 291 A1**
(43) Date of publication of application: **18.10.2023**
(21) Application number: 22755573.7
(22) Date of filing: 17.02.2022
(51) Int. Cl.: H04W 52/02, H04W 76/27

(54) **TERMINAL STATE SWITCHING METHOD, APPARATUS, AND TERMINAL**

(30) Priority: 22.02.2021 CN 202110199053
(71) Applicant: Vivo Mobile Communication Co., Ltd., Dongguan, Guangdong 523863 (CN)
(72) Inventor: CHEN, Li, Dongguan, Guangdong 523863 (CN); PAN, Xueming, Dongguan, Guangdong 523863 (CN); SHEN, Xiaodong, Dongguan, Guangdong 523863 (CN)
(74) Representative: Winter, Brandl - Partnerschaft mbB
(86) International application number: PCT/CN2022/076686
(87) International publication number: WO 2022/174800

(57) **Abstract**

This application discloses a terminal state switch method and apparatus, and a terminal, where the switch method includes: when a first condition is met, a terminal switching from a first state to a second state, where the second state is an idle state, a connected state, or an inactive state, and communication power consumption of the terminal in the first state is less than communication power consumption of the terminal in the second state.

## Description

### CROSS-REFERENCE TO RELATED APPLICATIONS

This application claims priority to Chinese Patent Application No. 202110199053.0, filed on February 22, 2021 in China, which is incorporated herein by reference in its entirety.

### TECHNICAL FIELD

This application relates to the field of communications technologies, and in particular, to a terminal state switch method and apparatus, and a terminal.

### BACKGROUND

In the design of 3G, 4G, and 5G communications systems, different radio resource control (Radio Resource Control, RRC) states of the terminal are introduced, including an idle (IDLE) state and a connected (CONNECTED) state. When the terminal needs to send and receive data or has services, the terminal may enter the connected state; and in order to save power, the terminal can switch from the connected state to the idle state after receiving and sending data. In the idle state, the terminal only needs to receive necessary synchronization information, paging (Paging) information, and system broadcast information such as a system information block (System Information Block, SIB), and at the same time, the terminal needs to perform radio resource management (Radio Resource Management, RRM) measurement for operations such as cell selection or reselection. Compared with the connected state, the power in the idle state can be reduced a lot, and generally speaking, the power can reach a 10-mW level, which is one tenth or even less of that in the connected state.

However, in the late 4G and a new radio (New Radio, NR) system of 5G, a new RRC state is introduced: an inactive (INACTIVE) state. In this state, the behavior of the terminal is basically similar to that in the idle state. In addition to the idle state behavior, it is also necessary to receive an RAN paging message and update an RNA (RAN notification area) area.

It can be seen that a maximum power-saving state of the current terminal is the idle state. However, in the design of the idle state, it still needs to receive synchronization information, Paging information, and system broadcast information such as a system information block (SIB), and perform RRM measurement. As a result, communication power consumption of the terminal in the idle state is unable to be reduced and there may be unnecessary power consumption.

### SUMMARY

Embodiments of this application aim to provide a terminal state switch method and apparatus, and a terminal, to solve the power consumption problem of the terminal in the existing RRC state in the prior art.

According to a first aspect, an embodiment of this application provides a terminal state switch method, including:
when a first condition is met, a terminal switching from a first state to a second state, where the second state is an idle state, a connected state, or an inactive state, and communication power consumption of the terminal in the first state is less than communication power consumption of the terminal in the second state, where
the first condition includes at least one of the following:
   the terminal receives a wake-up signal or an activation signal, and the wake-up signal or the activation signal is used to instruct the terminal to switch from the first state to the second state or exit from the first state;
   the terminal does not receive a wake-up signal or an activation signal within first preset duration;
   a preset cycle or a timer expires;
   a type of the terminal changes;
   a state of the terminal changes;
   an attribute of the terminal changes;
   a scenario of the terminal changes;
   the terminal determines based on a preset rule that the terminal moves;
   the terminal determines based on internal implementation that the terminal moves;
   the terminal determines based on the internal implementation that it is necessary to switch from the first state to the second state;
   an area in which the terminal is located changes;
   the terminal receives a system information change instruction;
   the terminal receives a reference signal change instruction;
   received signal quality of the terminal is higher than a first threshold;
   a variable quantity of the received signal quality of the terminal is lower than a second threshold;
   the received signal quality of the terminal is lower than a third threshold; and
   the variable quantity of the received signal quality of the terminal is higher than a fourth threshold.

According to a second aspect, an embodiment of this application provides a terminal state switch apparatus, applied to a terminal and including:
a first switch module, configured to: when a first condition is met, control the terminal to switch from a first state to a second state, where the second state is an idle state, a connected state, or an inactive state, and communication power consumption of the terminal in the first state is less than communication power consumption of the terminal in the second state, where
the first condition includes at least one of the following:
   the terminal receives a wake-up signal or an activation signal, and the wake-up signal or the activation signal is used to instruct the terminal to switch from the first state to the second state or exit from the first state;
   the terminal does not receive a wake-up signal or an activation signal within first preset duration;
   a preset cycle or a timer expires;
   a type of the terminal changes;
   a state of the terminal changes;
   an attribute of the terminal changes;
   a scenario of the terminal changes;
   the terminal determines based on a preset rule that the terminal moves;
   the terminal determines based on internal implementation that the terminal moves;
   the terminal determines based on the internal implementation that it is necessary to switch from the first state to the second state;
   an area in which the terminal is located changes;
   the terminal receives a system information change instruction;
   the terminal receives a reference signal change instruction;
   received signal quality of the terminal is higher than a first threshold;
   a variable quantity of the received signal quality of the terminal is lower than a second threshold;
   the received signal quality of the terminal is lower than a third threshold; and
   the variable quantity of the received signal quality of the terminal is higher than a fourth threshold.

According to a third aspect, an embodiment of this application provides a terminal. The terminal includes a processor, a memory, and a program or an instruction stored in the memory and executable on the processor, where when the program or the instruction is executed by the processor, steps of the method according to the first aspect are implemented.

According to a fourth aspect, an embodiment of this application provides a readable storage medium. The readable storage medium stores a program or an instruction, and when the program or the instruction is executed by a processor, steps of the method according to the first aspect are implemented.

According to a fifth aspect, an embodiment of this application provides a chip. The chip includes a processor and a communications interface, the communications interface is coupled to the processor, and the processor is configured to run a program or an instruction of a network side device, to implement the method according to the first aspect.

According to a sixth aspect, an embodiment of this application provides a computer program product. The computer program product is stored in a non-volatile storage medium, and the computer program product is executed by at least one processor to implement steps of the method according to the first aspect.

According to a seventh aspect, an embodiment of this application provides a communications device, configured to perform steps in the method according to the first aspect.

In this embodiment of this application, by introducing the first state, the terminal can greatly reduce the power consumption of communication reception in the first state, and by defining the first condition that triggers the terminal to switch from the first state to the second state (that is, a non-first state), the terminal is guaranteed to achieve the purpose of saving power on the premise of sufficiently reliable communication quality.

### BRIEF DESCRIPTION OF DRAWINGS

FIG. 1 is a block diagram of a wireless communications system to which embodiments of this application can be applied;
FIG. 2 is a schematic diagram of steps of a terminal state switch method according to an embodiment of this application;
FIG. 3 is a schematic diagram of a structure of a terminal state switch apparatus according to an embodiment of this application;
FIG. 4 is a first schematic diagram of a structure of a terminal according to an embodiment of this application; and
FIG. 5 is a second schematic diagram of a structure of a terminal according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the description and the claims of this application are used to distinguish between similar objects, and do not need to be used to describe a specific order or sequence. It should be understood that, the terms termed in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. Anew radio (New Radio, NR) system is described below for an illustration purpose, and the term NR is used in most of the descriptions, although these technologies can also be used in an application other than an NR system application, for example, a 6^{th} generation (6^{th} Generation, 6G) communications system.

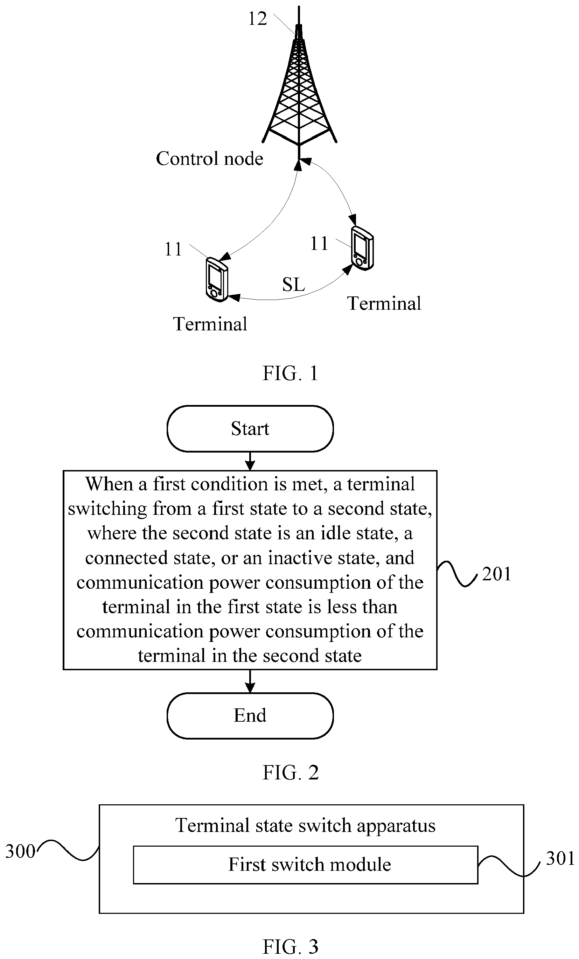

FIG. 1 is a block diagram of a wireless communications system to which embodiments of this application can be applied. The wireless communications system includes a terminal 11 and a network side device 12. The terminal 11 may be referred to as a terminal device or user equipment (User Equipment, UE). The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable device), vehicle user equipment (VUE), and pedestrian user equipment (PUE). The wearable device includes a bracelet, a headset, and glasses. It should be noted that a specific type of the terminal 11 is not limited in this embodiment of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a wireless local area network (Wireless Local Area Network, WLAN) access point, a wireless fidelity (Wireless Fidelity, WiFi) node, a transmitting receiving point (Transmitting Receiving Point, TRP), or another appropriate term in the art. As long as the same technical effect is achieved, the base station is not limited to a specific technical term. It should be noted that the base station in the NR system is taken only as an example in the embodiments of this application, but a specific type of the base station is not limited.

With reference to the accompanying drawings, the terminal state switch method and apparatus, and a terminal provided in the embodiments of this application are described in detail below by using specific embodiments and application scenarios thereof.

As shown in FIG. 2, an embodiment of this application provides a terminal state switch method, and the method includes the following steps.

Step 201. When a first condition is met, switch a terminal from a first state to a second state, where the second state is an idle state (Idle state), a connected state (Connected state), or an inactive state (inactive state), and communication power consumption of the terminal in the first state is less than communication power consumption of the terminal in the second state.

Optionally, that communication power consumption of the terminal in the first state is less than communication power consumption of the terminal in the second state is specifically:
power consumption per unit time of the terminal in the first state is less than that of the terminal in the second state;
   or
in a same time period, the communication power consumption of the terminal in the first state is less than that of the terminal in the second state;
   or
in unit time or same duration, the power of the terminal in the first state is less than that of the terminal in the connected state, the idle state, or the inactive state.

In at least one embodiment of this application, a first state is a newly introduced terminal state, which may be referred to as a sleep (SLEEP) state, or a zero power (Zero Power, ZP) state, or an almost zero power (Almost Zero Power, AZP or Near Zero Power, NZP) state, or a low power (Low Power, LP) state, or an ultra/super low power (Ultra/Super Low Power, ULP/SLP) state, which are subsequently all referred to as the SLEEP state.

For example, the first state may be a newly defined RRC state, which is an RRC state different from the existing three RRC states: an RRC connected state (RRC_CONNECTED), an RRC idle state (RRC_IDLE), and an RRC inactive state (RRC_INACTIVE); or is a sub-state of the existing RRC state, such as a sub-state of the RRC idle state; or is a newly defined core network state, which is a core network state different from the existing core network connected state (such as connection management CM_CONNECTED) and a core network idle state (CM IDLE).

In the SLEEP state, the terminal can further reduce reception of a synchronization signal (Synchronization Signal, SS), a reference signal (Reference Signal, RS), paging (Paging) information, or system broadcast information such as a system information block (SIB), and reduce RRM measurement. Through reduction of the receiving/measuring behavior, the RF and MODEL modules can be really turned off, thus greatly reducing power consumption of communication reception. For example, it can be achieved by introducing a receiver with near "zero" power into the receiving module of the terminal. This receiver with near "zero" power does not need complex RF module signal detection (such as amplification, filtering, quantization, and the like) and MODEM signal processing, and can wake up the terminal only by passively matching filtering and signal processing with lower power consumption.

Since the SLEEP state is introduced into the terminal, it is necessary to define a new state switch process for the terminal to enter a non-SLEEP state (namely, a second state) from the SLEEP state, so as to ensure that the terminal can obtain benefits of power saving as much as possible on the premise of sufficiently reliable communication quality. This application describes in detail the introduction from the SLEEP state to the non-SLEEP state and a corresponding process.

The first condition includes at least one of the following conditions.

Condition a1, the terminal receives a wake-up signal or an activation signal, and the wake-up signal or the activation signal is used to instruct the terminal to switch from the first state to the second state or exit from the first state, where
the wake-up signal or the activation signal may be a preset sequence, which may be a sequence specified in a protocol or configured by a network. Optionally, the terminal can monitor one or more wake-up signal sequences (also referred to as activation signal sequences).

Condition a2, the terminal does not receive a wake-up signal or an activation signal within first preset duration; this condition is to prevent the terminal from falling off the network while sleeping for too long; and the first preset duration is configured by a network or specified in a protocol; and
the wake-up signal or the activation signal is used to instruct the terminal to switch from the first state to the second state or exit from the first state, where the wake-up signal or the activation signal may be a preset sequence, which may be a sequence specified in a protocol or configured by a network. Optionally, the terminal can monitor one or more wake-up signal sequences (also referred to as activation signal sequences).

Condition a3, a preset cycle or a timer expires; and the preset cycle or the timer is used to control the terminal to switch from the first state to the second state, and under this condition, the terminal periodically retreats to the second state, where
the preset cycle or the timer is configured by a network side or specified in a protocol.

Condition a4, the type of the terminal changes.

Condition a5, the state of the terminal changes.

Condition a6, the attribute of the terminal changes.

Condition a7, the scenario of the terminal changes.

For the condition a4 to the condition a7, the terminal determines, based on the attribute, the type, the state, or the scenario (such as a terminal of a fixed type or a terminal deployed in a fixed scenario), whether to switch from the first state to the second state. Specifically, when the type, the state, the attribute, or the scenario of the terminal changes, the terminal switches from the first state to the second state.

Optionally, the condition a4 is: the type of the terminal changes within fifth preset duration; the condition a5 is: the state of the terminal changes within sixth preset duration; the condition a6 is: the attribute of the terminal changes within seventh preset duration; and the condition a7 is: the scenario of the terminal changes within eighth preset duration. The fifth preset duration, the sixth preset duration, the seventh preset duration, and the eighth preset duration are configured by a network side or specified in a protocol.

Condition a8, the terminal determines based on a preset rule that the terminal moves, where the preset rule is configured by a network or specified in a protocol. For example, the terminal determines, based on determining whether the terminal moves, whether to switch from the first state to the second state. Specifically, when the terminal moves, the terminal switches from the first state to the second state.

Condition a9, the terminal determines based on internal implementation that the terminal moves. For example, the terminal determines whether the terminal moves based on characteristics thereof or an internal sensor, and the terminal switches from the first state to the second state when the terminal moves.

Condition a10, the terminal determines based on the internal implementation that it is necessary to switch from the first state to the second state. For example, the terminal determines whether it is necessary to switch from the first state to the second state based on an internal cycle or an internal timer; and specifically, when the internal cycle or the internal timer expires, the terminal switches from the first state to the second state.

Condition a11, the area in which the terminal is located changes. For example, the terminal determines whether the area in which the terminal is located is updated, so as to determine whether to switch from the first state to the second state; and specifically, when the area in which the terminal is located changes, the terminal switches from the first state to the second state.

Condition a12, the terminal receives a system information change instruction. For example, the system information change indication may be carried by using a wake-up signal or sequence.

Condition a13, the terminal receives a reference signal change instruction. For example, the reference signal change indication may be carried by using a wake-up signal or sequence.

Condition a14, received signal quality of the terminal is higher than a first threshold.

Condition a15, a variable quantity of the received signal quality of the terminal is lower than a second threshold.

Condition a16, the received signal quality of the terminal is lower than a third threshold.

Condition a17, the variable quantity of the received signal quality of the terminal is higher than a fourth threshold.

For the condition a14 to the condition a17, the received signal quality includes: at least one of reference signal received power (Reference Signal Received Power, RSRP), reference signal received quality (Reference Signal Received Quality, RSRQ), received signal strength indication (Received Signal Strength Indication, RSSI), pathloss (Pathloss), and signal to interference plus noise ratio (Signal to Interference plus Noise Ratio, SINR).

Optionally, the condition a14 is: the received signal quality of the terminal in ninth preset duration is higher than the first threshold; the condition a15 is: the variable quantity of the received signal quality of the terminal in tenth preset duration is lower than the second threshold; the condition a16 is: the received signal quality of the terminal in eleventh preset duration is lower than the third threshold; and the condition a17 is: the variable quantity of the received signal quality of the terminal in twelfth preset duration is higher than the fourth threshold, where the ninth preset duration, the tenth preset duration, the eleventh preset duration, and the twelfth preset duration are configured by a network side or specified in a protocol.

In an optional embodiment, for the condition a11, the method further includes:
when a second condition is met, determining that the area in which the terminal is located changes, where the second condition includes at least one of the following:
area information corresponding to the area in which the terminal is located is changed;
the terminal does not receive the area information corresponding to the area in which the terminal is located, where a correspondence between the area information and the area is specified by a protocol or configured by a network;
the type of the terminal changes;
the attribute of the terminal changes;
the scenario of the terminal changes;
the state of the terminal changes; and
the terminal determines based on internal implementation that the terminal moves, for example, determining whether the terminal moves by using the internal sensor of the terminal.

The area information includes a sequence, a signal, or ID information indicating the area information.

Optionally, when a second condition is met, the determining that the area in which the terminal is located changes includes:
if the second condition is met within second preset duration, determining that the area in which the terminal is located changes, where the second preset duration is specified by a protocol or configured by a network.

In another optional embodiment, when the first condition includes that the terminal receives the wake-up signal or the activation signal, or the terminal does not receive the wake-up signal or the activation signal within the first preset duration, the method further includes:
before the terminal enters the first state, receiving, by the terminal, configuration information sent by a network side device, where the configuration information is used to configure the terminal to monitor a relevant parameter of the wake-up signal or the activation signal.

For example, the related parameter of the wake-up signal or the activation signal includes at least one of time domain information, frequency domain information, code domain information, spatial domain information, and a sequence of the wake-up signal or the activation signal.

The receiving, by the terminal, configuration information sent by a network side device specifically includes the following methods.

Method 1, the terminal receives a configuration for the wake-up signal from the network, including one or more of the following:
the terminal receives signaling (a configuration such as an SIB or an MIB) from the network, where the signaling includes a time location, a frequency domain resource, code resource information, and the like configured for the wake-up signal (such as a reception cycle in time, an offset, a density in frequency domain, a code domain resource, and the like); and
the terminal calculates, based on received network signaling and terminal ID information, resource information for receiving the wake-up signal, including a time location, a frequency domain location, a code resource, and the like.

Method 2, the terminal receives a configuration of the wake-up signal from the network, including one or more of the following:
the terminal receives signaling (such as a dedicated signaling configuration) from the network, where the signaling includes one or more configurations of the wake-up signal;
sequence information of the wake-up signal, such as a base sequence, scrambling code information, and the like;
frequency domain information of the wake-up signal;
a parameter configuration that triggers state switch, such as a timer configuration; and
a configuration for a Beacon signal.

Following the above example, in step 201, after the terminal switches from the first state to the second state, the method further includes at least one of the following:
sending, by the terminal, first indication information to a first communications device, where the first indication information is used to instruct the terminal to switch from the first state to the second state, or the first indication information is used to instruct the terminal to enter the second state;
receiving, by the terminal, a synchronization signal;
receiving, by the terminal, a reference signal;
receiving, by the terminal, a system message (including at least one of a main information block MIB, a system information block SIB 1, other system messages or changed system messages); and
monitoring, by the terminal, a paging message (including at least one of a physical downlink control channel (Physical Downlink Control Channel, PDCCH) corresponding to the paging message, a paging physical downlink shared channel (Physical Downlink Shared Channel, PDSCH), and a short message (short message)).

The first communications device includes at least one of the following: a network side device (such as a base station, an access point, or the like), another terminal device communicating with the terminal (such as Sidelink or another terminal in D2D or V2X), and a transceiver node of another non-mobile communications system communicating with the terminal (such as a sensor receiving apparatus, a transmitting apparatus, or the like).

The sending, by the terminal, first indication information to a first communications device includes:
sending, by the terminal, the first indication information to the first communications device in a first manner, where the first manner includes at least one of the following:
sending the first indication information in a random access procedure; for example, sending the first indication information through msg.1, Msg.3, or Msg.5 with four-step random access, or sending the first indication information through msg.1 or msg.A with two-step random access;
sending a sounding reference signal carrying the first indication information;
sending an uplink scheduling request (Scheduling request, SR) carrying the first indication information;
sending a buffer status report (Buffer Status Report, BSR) including the first indication information;
sending an uplink signal carrying the first indication information; and
sending the first indication information on an uplink channel.

In at least one optional embodiment of this application, the sending, by the terminal, first indication information to a first communications device includes:
if the terminal switches to the second state based on a target condition in the first condition, sending, by the terminal, the first indication information to the first communications device; or
if the terminal switches to the second state based on other conditions than the target condition in the first condition, skipping, by the terminal, sending the first indication information to the first communications device, where
the target condition includes one or more of the first condition specified by a protocol or configured by a network.

For example, if the target condition is the condition a1 and the condition a2 in the first condition, when the terminal switches to the second state based on the trigger of the condition a1 or the condition a2, the terminal sends the first indication information to the first communications device; and when the terminal switches to the second state based on the trigger of the condition a4, the terminal does not send the first indication information to the first communications device.

In at least one optional embodiment of this application, after the terminal switches from the first state to the second state, the method further includes:
the terminal maintaining the second state;
   or
when a fifth condition is met, the terminal switching to the first state.

When the fifth condition is met, the method further includes:
before the terminal switches to the first state, sending, by the terminal, second indication information to the first communications device, where the second indication information is used to instruct the terminal to enter the first state or instruct the terminal to re-enter the first state or instruct the terminal to switch from the second state to the first state.

In other words, when the fifth condition is met, if it is necessary for the terminal to switch to the first state, there are following two manners:
a) before the terminal re-enters the first state, the network side is not informed; and
b) before the terminal re-enters the first state, the terminal informs, by sending second indication information to the network side, the network side device that the terminal enters the first state or re-enters the first state or switches from the second state to the first state.

Before the terminal switches to the first state, the sending, by the terminal, second indication information to the first communications device includes:
before the terminal switches to the first state, sending, by the terminal, the second indication information to the first communications device in a second manner, where the second manner includes at least one of the following:
sending the second indication information in a random access procedure; for example, sending the second indication information through msg. 1, Msg.3, or Msg. 5 with four-step random access, or sending the second indication information through msg.1 or msg.A with two-step random access;
sending a sounding reference signal carrying the second indication information;
sending an uplink scheduling request (Scheduling request, SR) carrying the second indication information;
sending a buffer status report (Buffer Status Report, BSR) including the second indication information;
sending an uplink signal carrying the second indication information; and
sending the second indication information on an uplink channel.

In an optional embodiment, the terminal maintaining the second state includes:
when a fourth condition is met, the terminal maintaining the second state, where the fourth condition includes at least one of the following:
it is determined based on terminal mobility that the terminal may move out of the area in which the terminal is located; and this condition can reduce an overhead of the wake-up signal in the first state;
it is determined based on area information that the terminal may move out of the area in which the terminal is located; and this condition can reduce an overhead of the wake-up signal in the first state;
the type of the terminal changes;
the attribute of the terminal changes;
the scenario of the terminal changes;
the state of the terminal changes; and
the terminal determines based on the internal implementation that the terminal moves.

For example, if the terminal may move out of the area in which the terminal is located, the terminal maintains the second state, which can reduce an overhead of the wake-up signal in the sleep state. For example, if the terminal does not belong to a fixed type, or is deployed in a non-fixed scenario, or the state changes, the terminal maintains the second state; and for another example, if the internal module of the terminal detects the movement, the terminal maintains the second state.

When the fourth condition is met, the terminal maintaining the second state includes:
if the fourth condition is met within third preset duration, the terminal maintaining the second state, where the third preset duration is specified by a protocol or configured by a network.

In another optional embodiment, the fifth condition includes at least one of the following:
it is determined based on terminal mobility that the terminal may not move out of the area in which the terminal is located;
it is determined based on area information that the terminal may not move out of the area in which the terminal is located;
the type of the terminal is fixed;
the attribute of the terminal is fixed;
the terminal is deployed in a fixed scenario;
the state of the terminal does not change; and
the terminal determines based on the internal implementation that the terminal does not move.

For example, if the terminal is in a fixed type, or deployed in a fixed scenario, or the state has not changed, the terminal re-enters the first state; and for another example, if the internal module of the terminal does not detect the movement, the terminal re-enters the first state.

When the fifth condition is met, the terminal switching to the first state includes:
if the fifth condition is met within fourth preset duration, the terminal switching to the first state, where the fourth preset duration is specified by a protocol or configured by a network.

It should be noted that the area in which the terminal is located and that mentioned in this embodiment of this application is: a cell, an RAN-based notification area (RAN-based Notification Area, RNA), a tracking area (Tracking Area, TA) or a newly defined area.

Example 1: Wake-up signal and paging transmission, where the terminal switches between the sleep state and the idle state again after entering the sleep state, and the network is unknown about this.
1. The terminal wakes up from the SLEEP state to the IDLE state (which can be configured by the network or implemented by the terminal).
   a) The terminal wakes up periodically based on the cycle configured by the network.
   b) The terminal wakes up based on implementation thereof (including periodicity/sensor/...).
2. Determine whether the terminal will move out of the cell.

If it is determined that the terminal will move out of the cell, the IDLE state is maintained.
(1) Inform the network that the terminal returns to IDLE, thus reducing an overhead for the network.
(2) The network may not be notified.

If it is determined that the terminal will not move out of the cell, the terminal returns to the SLEEP state without notifying the network.

Example 2: Wake-up signal and paging transmission, where the terminal switches between the sleep state and the idle state again after entering the sleep state, and the network is known about this.

3. The terminal wakes up from the SLEEP state to the IDLE state (which can be configured by the network or implemented by the terminal).
a) The terminal wakes up periodically based on the cycle configured by the network.
b) The terminal wakes up based on implementation thereof (including periodicity/sensor/...).

4. Determine whether the terminal will move out of the cell.

If it is determined that the terminal will move out of the cell, the IDLE state is maintained.
(1) Inform the network that the terminal returns to IDLE, thus reducing an overhead for the network.

If it is determined that the terminal will not move out of the cell, the terminal returns to the SLEEP state without notifying the network.

Example 3: Wake-up signal + paging + beacon transmission.

If the beacon is configured, when the beacon is lost, the terminal can switch from the SLEEP state to the IDLE state. In this example, the terminal does not need to wake up periodically as in Example 1 and Example 2, which can reduce power consumption.

In this embodiment of this application, by introducing the first state, the terminal can greatly reduce the power consumption of communication reception in the first state, and by defining the first condition that triggers the terminal to switch from the first state to the second state (that is, a non-first state), the terminal is guaranteed to achieve the purpose of saving power on the premise of sufficiently reliable communication quality.

It should be noted that the terminal state switch method provided in the embodiments of this application may be performed by a terminal state switch apparatus or a control module that is in the terminal state switch apparatus and that is configured to perform and load the terminal state switch method. In the embodiments of this application, an example in which the terminal state switch apparatus performs the terminal state switch method is used to describe the terminal state switch apparatus provided in the embodiments of this application.

As shown in FIG. 3, an embodiment of this application further provides a terminal state switch apparatus 300, applied to a terminal and including:
a first switch module 301, configured to: when a first condition is met, control the terminal to switch from a first state to a second state, where the second state is an idle state, a connected state, or an inactive state, and communication power consumption of the terminal in the first state is less than communication power consumption of the terminal in the second state, where
the first condition includes at least one of the following:
   the terminal receives a wake-up signal or an activation signal, and the wake-up signal or the activation signal is used to instruct the terminal to switch from the first state to the second state or exit from the first state;
   the terminal does not receive a wake-up signal or an activation signal within first preset duration;
   a preset cycle or a timer expires;
   a type of the terminal changes;
   a state of the terminal changes;
   an attribute of the terminal changes;
   a scenario of the terminal changes;
   the terminal determines based on a preset rule that the terminal moves;
   the terminal determines based on internal implementation that the terminal moves;
   the terminal determines based on the internal implementation that it is necessary to switch from the first state to the second state;
   an area in which the terminal is located changes;
   the terminal receives a system information change instruction;
   the terminal receives a reference signal change instruction;
   received signal quality of the terminal is higher than a first threshold;
   a variable quantity of the received signal quality of the terminal is lower than a second threshold;
   the received signal quality of the terminal is lower than a third threshold; and
   the variable quantity of the received signal quality of the terminal is higher than a fourth threshold.

In an optional embodiment, the apparatus further includes:
a determining module, configured to: when a second condition is met, determine that the area in which the terminal is located changes, where the second condition includes at least one of the following:
area information corresponding to the area in which the terminal is located is changed;
the terminal does not receive the area information corresponding to the area in which the terminal is located;
the type of the terminal changes;
the attribute of the terminal changes;
the scenario of the terminal changes;
the state of the terminal changes; and
the terminal determines based on the internal implementation that the terminal moves.

In an optional embodiment, the determining module includes:
a determining submodule, configured to: if the second condition is met within second preset duration, determine that the area in which the terminal is located changes, where the second preset duration is specified by a protocol or configured by a network.

In an optional embodiment, when the first condition includes that the terminal receives the wake-up signal or the activation signal, or the terminal does not receive the wake-up signal or the activation signal within the first preset duration, the apparatus further includes:
a configuration receiving module, configured to: before the terminal enters the first state, receive configuration information sent by a network side device, where the configuration information is used to configure the terminal to monitor a relevant parameter of the wake-up signal or the activation signal.

In an optional embodiment, after the terminal switches from the first state to the second state, the apparatus further includes at least one of the following:
a first sending module, configured to send first indication information to a first communications device, where the first indication information is used to instruct the terminal to switch from the first state to the second state, or the first indication information is used to instruct the terminal to enter the second state;
a first receiving module, configured to receive a synchronization signal;
a second receiving module, configured to receive a reference signal;
a third receiving module, configured to receive a system message; and
a monitoring module, configured to monitor a paging message.

In an optional embodiment, the first sending module includes:
a first sending submodule, configured to send the first indication information to the first communications device in a first manner, where the first manner includes at least one of the following:
sending the first indication information in a random access procedure;
sending a sounding reference signal carrying the first indication information;
sending an uplink scheduling request carrying the first indication information;
sending a buffer status report including the first indication information;
sending an uplink signal carrying the first indication information; and
sending the first indication information on an uplink channel.

In an optional embodiment, the first sending module includes:
a second sending submodule, configured to: if the terminal switches to the second state based on a target condition in the first condition, send the first indication information to the first communications device; or
if the terminal switches to the second state based on other conditions than the target condition in the first condition, skip sending the first indication information to the first communications device, where
the target condition includes one or more of the first condition specified by a protocol or configured by a network.

In an optional embodiment, the apparatus further includes:
a maintain module, configured to maintain the second state;
   or
a second switch module, configured to: when a fifth condition is met, switch to the first state.

In an optional embodiment, the apparatus further includes:
a second sending module, configured to: before the terminal switches to the first state, send second indication information to the first communications device, where the second indication information is used to instruct the terminal to enter the first state or instruct the terminal to re-enter the first state or instruct the terminal to switch from the second state to the first state.

In an optional embodiment, the second sending module includes:
a third sending submodule, configured to: before the terminal switches to the first state, send the second indication information to the first communications device in a second manner, where the second manner includes at least one of the following:
sending the second indication information in a random access procedure;
sending a sounding reference signal carrying the second indication information;
sending an uplink scheduling request carrying the second indication information;
sending a buffer status report including the second indication information;
sending an uplink signal carrying the second indication information; and
sending the second indication information on an uplink channel.

In an optional embodiment, the maintaining module includes:
a maintaining submodule, configured to: when a fourth condition is met, maintain the second state, where the fourth condition includes at least one of the following:
it is determined based on terminal mobility that the terminal may move out of the area in which the terminal is located;
it is determined based on area information that the terminal may move out of the area in which the terminal is located;
the type of the terminal changes;
the attribute of the terminal changes;
the scenario of the terminal changes;
the state of the terminal changes; and
the terminal determines based on the internal implementation that the terminal moves.

In an optional embodiment, the maintaining submodule includes:
a maintaining unit, configured to: if the fourth condition is met within third preset duration, maintain the second state, where the third preset duration is specified by a protocol or configured by a network.

In an optional embodiment, the fifth condition includes at least one of the following:
it is determined based on terminal mobility that the terminal may not move out of the area in which the terminal is located;
it is determined based on area information that the terminal may not move out of the area in which the terminal is located;
the type of the terminal is fixed;
the attribute of the terminal is fixed;
the terminal is deployed in a fixed scenario;
the state of the terminal does not change; and
the terminal determines based on the internal implementation that the terminal does not move.

In an optional embodiment, the second switch module includes:
a second switch submodule, configured to: if the fifth condition is met within fourth preset duration, switch to the first state, where the fourth preset duration is specified by a protocol or configured by a network.

In this embodiment of this application, by introducing the first state, the terminal can greatly reduce the power consumption of communication reception in the first state, and by defining the first condition that triggers the terminal to switch from the first state to the second state (that is, a non-first state), the terminal is guaranteed to achieve the purpose of saving power on the premise of sufficiently reliable communication quality.

It should be noted that the terminal state switch apparatus provided in the embodiments of this application is an apparatus that can perform the foregoing terminal state switch method. Therefore, all embodiments of the foregoing terminal state switch method are applicable to the apparatus, and a same or similar beneficial effect can be achieved.

The terminal state switch apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The terminal state switch apparatus in this embodiment of this application may be an apparatus with an operating system. The operating system may be an Android (Android) operating system, may be an iOS operating system, or may be another possible operating system. This is not specifically limited in this embodiment of this application.

The terminal state switch apparatus provided in this embodiment of this application can implement processes implemented in the method embodiments from FIG. 1 to FIG. 2. To avoid repetition, details are not described herein again.

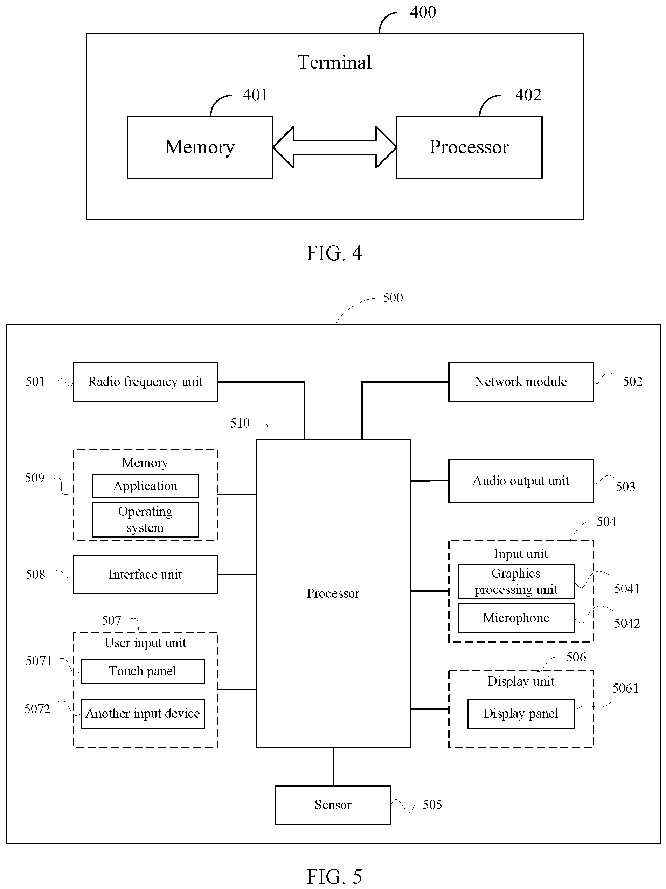

Optionally, as shown in FIG. 4, an embodiment of this application further provides a terminal 400, including a processor 401, a memory 402, and a program or an instruction stored in the memory 402 and executable on the processor 401. When the program or the instruction is executed by the processor 401, the processes in the foregoing embodiments of the terminal state switch method are implemented and a same technical effect can be achieved. To avoid repetition, details are not described herein again.

FIG. 5 is a schematic diagram of a hardware structure of a terminal according to an embodiment of this application.

A terminal 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the terminal 500 may further include a power supply (such as a battery) that supplies power to each component. The power supply may be logically connected to the processor 510 by using a power supply management system, to implement functions such as charging and discharging management, and power consumption management by using the power supply management system. The terminal structure shown in FIG. 5 constitutes no limitation on the terminal, and the terminal may include more or fewer components than those shown in the figure, or combine some components, or have different component arrangements. Details are not described herein.

It should be understood that, in the embodiments of this application, the input unit 504 may include a graphics processing unit (Graphics Processing Unit, GPU) 5041 and a microphone 5042, and the graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light emitting diode, or the like. The user input unit 507 includes a touch panel 5071 and another input device 5072. The touch panel 5071 is also referred to as a touchscreen. The touch panel 5071 may include two parts: a touch detection apparatus and a touch controller. The another input device 5072 may include but is not limited to a physical keyboard, a functional button (such as a volume control button or a power on/off button), a trackball, a mouse, and a joystick. Details are not described herein.

In this embodiment of this application, the radio frequency unit 501 receives downlink data from a network side device and then sends the downlink data to the processor 510 for processing; and sends uplink data to the network side device. Usually, the radio frequency unit 501 includes but is not limited to an antenna, at least one amplifier, a transceiver, a coupler, a low noise amplifier, a duplexer, and the like.

The memory 509 may be configured to store a software program or an instruction and various data. The memory 509 may mainly include a program or instruction storage area and a data storage area. The program or instruction storage area may store an operating system, and an application or an instruction required by at least one function (for example, a sound playing function or an image playing function). In addition, the memory 509 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 510 may include one or more processing units. Optionally, an application processor and a modem processor may be integrated into the processor 510. The application processor mainly processes an operating system, a user interface, an application, an instruction, or the like. The modem processor mainly processes wireless communications, for example, a baseband processor. It can be understood that, alternatively, the modem processor may not be integrated into the processor 510.

The processor 510 is configured to: when a first condition is met, control the terminal to switch from a first state to a second state, where the second state is an idle state, a connected state, or an inactive state, and communication power consumption of the terminal in the first state is less than communication power consumption of the terminal in the second state, where
the first condition includes at least one of the following:
the terminal receives a wake-up signal or an activation signal, and the wake-up signal or the activation signal is used to instruct the terminal to switch from the first state to the second state or exit from the first state;
the terminal does not receive a wake-up signal or an activation signal within first preset duration;
a preset cycle or a timer expires;
a type of the terminal changes;
a state of the terminal changes;
an attribute of the terminal changes;
a scenario of the terminal changes;
the terminal determines based on a preset rule that the terminal moves;
the terminal determines based on internal implementation that the terminal moves;
the terminal determines based on the internal implementation that it is necessary to switch from the first state to the second state;
an area in which the terminal is located changes;
the terminal receives a system information change instruction;
the terminal receives a reference signal change instruction;
received signal quality of the terminal is higher than a first threshold;
a variable quantity of the received signal quality is lower than a second threshold;
the received signal quality of the terminal is lower than a third threshold; and
the variable quantity of the received signal quality is higher than a fourth threshold.

In this embodiment of this application, by introducing the first state, the terminal can greatly reduce the power consumption of communication reception in the first state, and by defining the first condition that triggers the terminal to switch from the first state to the second state (that is, a non-first state), the terminal is guaranteed to achieve the purpose of saving power on the premise of sufficiently reliable communication quality.

It should be noted that the terminal provided in the embodiments of this application is a terminal that can perform the foregoing terminal state switch method. Therefore, all embodiments of the foregoing terminal state switch method are applicable to the terminal, and a same or similar beneficial effect can be achieved.

An embodiment of this application further provides a readable storage medium. The readable storage medium stores a program or an instruction, and when the program or the instruction is executed by a processor, the processes of the foregoing embodiments of the terminal state switch method are implemented, and a same technical effect can be achieved. To avoid repetition, details are not described herein again.

The processor is a processor in the electronic device in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing embodiments of the terminal state switch method, and a same technical effect can be achieved. To avoid repetition, details are not described herein again.

It should be understood that the chip mentioned in this embodiment of this application may also be referred to as a system-level chip, a system chip, a system on chip, a system chip on chip, and the like.

An embodiment of this application further provides a computer program product, the computer program product is stored in a non-volatile storage medium, and the computer program product is executed by at least one processor to implement the processes of the foregoing method embodiment, and the same technical effects can be achieved. To avoid repetition, details are not described herein again.

An embodiment of this application provides an electronic device, configured to perform the processes of the foregoing method embodiments, and the same technical effects can be achieved. To avoid repetition, details are not described herein again.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A terminal state switch method, comprising:
when a first condition is met, a terminal switching from a first state to a second state, wherein the second state is an idle state, a connected state, or an inactive state, and communication power consumption of the terminal in the first state is less than communication power consumption of the terminal in the second state, wherein
the first condition comprises at least one of the following:
the terminal receives a wake-up signal or an activation signal, and the wake-up signal or the activation signal is used to instruct the terminal to switch from the first state to the second state or exit from the first state;
the terminal does not receive a wake-up signal or an activation signal within first preset duration;
a preset cycle or a timer expires;
a type of the terminal changes;
a state of the terminal changes;
an attribute of the terminal changes;
a scenario of the terminal changes;
the terminal determines based on a preset rule that the terminal moves;
the terminal determines based on internal implementation that the terminal moves;
the terminal determines based on the internal implementation that it is necessary to switch from the first state to the second state;
an area in which the terminal is located changes;
the terminal receives a system information change instruction;
the terminal receives a reference signal change instruction;
received signal quality of the terminal is higher than a first threshold;
a variable quantity of the received signal quality of the terminal is lower than a second threshold;
the received signal quality of the terminal is lower than a third threshold; and
the variable quantity of the received signal quality of the terminal is higher than a fourth threshold.

2. The method according to claim 1, wherein the method further comprises:
when a second condition is met, determining that the area in which the terminal is located changes, wherein the second condition comprises at least one of the following:
area information corresponding to the area in which the terminal is located is changed;
the terminal does not receive the area information corresponding to the area in which the terminal is located;
the type of the terminal changes;
the attribute of the terminal changes;
the scenario of the terminal changes;
the state of the terminal changes; and
the terminal determines based on the internal implementation that the terminal moves.

3. The method according to claim 2, wherein when a second condition is met, the determining that the area in which the terminal is located changes comprises:
if the second condition is met within second preset duration, determining that the area in which the terminal is located changes, wherein the second preset duration is specified by a protocol or configured by a network.

4. The method according to claim 1, wherein when the first condition comprises that the terminal receives the wake-up signal or the activation signal, or the terminal does not receive the wake-up signal or the activation signal within the first preset duration, the method further comprises:
before the terminal enters the first state, receiving, by the terminal, configuration information sent by a network side device, wherein the configuration information is used to configure the terminal to monitor a relevant parameter of the wake-up signal or the activation signal.

5. The method according to claim 1, wherein after the terminal switches from the first state to the second state, the method further comprises at least one of the following:
sending, by the terminal, first indication information to a first communications device, wherein the first indication information is used to instruct the terminal to switch from the first state to the second state, or the first indication information is used to instruct the terminal to enter the second state;
receiving, by the terminal, a synchronization signal;
receiving, by the terminal, a reference signal;
receiving, by the terminal, a system message; and
monitoring, by the terminal, a paging message.

6. The method according to claim 5, wherein the sending, by the terminal, first indication information to a first communications device comprises:
sending, by the terminal, the first indication information to the first communications device in a first manner, wherein the first manner comprises at least one of the following:
sending the first indication information in a random access procedure;
sending a sounding reference signal carrying the first indication information;
sending an uplink scheduling request carrying the first indication information;
sending a buffer status report comprising the first indication information;
sending an uplink signal carrying the first indication information; and
sending the first indication information on an uplink channel.

7. The method according to claim 5, wherein the sending, by the terminal, first indication information to a first communications device comprises:
if the terminal switches to the second state based on a target condition in the first condition, sending, by the terminal, the first indication information to the first communications device; or
if the terminal switches to the second state based on other conditions than the target condition in the first condition, skipping, by the terminal, sending the first indication information to the first communications device, wherein
the target condition comprises one or more of the first condition specified by a protocol or configured by a network.

8. The method according to claim 1, wherein after the terminal switches from the first state to the second state, the method further comprises:
the terminal maintaining the second state;
or
when a fifth condition is met, the terminal switching to the first state.

9. The method according to claim 8, wherein when the fifth condition is met, the method further comprises:
before the terminal switches to the first state, sending, by the terminal, second indication information to the first communications device, wherein the second indication information is used to instruct the terminal to enter the first state or instruct the terminal to re-enter the first state or instruct the terminal to switch from the second state to the first state.

10. The method according to claim 9, wherein before the terminal switches to the first state, the sending, by the terminal, second indication information to the first communications device comprises:
before the terminal switches to the first state, sending, by the terminal, the second indication information to the first communications device in a second manner, wherein the second manner comprises at least one of the following:
sending the second indication information in a random access procedure;
sending a sounding reference signal carrying the second indication information;
sending an uplink scheduling request carrying the second indication information;
sending a buffer status report comprising the second indication information;
sending an uplink signal carrying the second indication information; and
sending the second indication information on an uplink channel.

11. The method according to claim 8, wherein the terminal maintaining the second state comprises:
when a fourth condition is met, the terminal maintaining the second state, wherein the fourth condition comprises at least one of the following:
it is determined based on terminal mobility that the terminal may move out of the area in which the terminal is located;
it is determined based on area information that the terminal may move out of the area in which the terminal is located;
the type of the terminal changes;
the attribute of the terminal changes;
the scenario of the terminal changes;
the state of the terminal changes; and
the terminal determines based on the internal implementation that the terminal moves.

12. The method according to claim 11, wherein when the fourth condition is met, the terminal maintaining the second state comprises:
if the fourth condition is met within third preset duration, the terminal maintaining the second state, wherein the third preset duration is specified by a protocol or configured by a network.

13. The method according to claim 8, wherein the fifth condition comprises at least one of the following:
it is determined based on terminal mobility that the terminal may not move out of the area in which the terminal is located;
it is determined based on area information that the terminal may not move out of the area in which the terminal is located;
the type of the terminal is fixed;
the attribute of the terminal is fixed;
the terminal is deployed in a fixed scenario;
the state of the terminal does not change; and
the terminal determines based on the internal implementation that the terminal does not move.

14. The method according to claim 8, wherein when the fifth condition is met, the terminal switching to the first state comprises:
if the fifth condition is met within fourth preset duration, the terminal switching to the first state, wherein the fourth preset duration is specified by a protocol or configured by a network.

15. A terminal state switch apparatus, applied to a terminal and comprising:
a first switch module, configured to: when a first condition is met, control the terminal to switch from a first state to a second state, wherein the second state is an idle state, a connected state, or an inactive state, and communication power consumption of the terminal in the first state is less than communication power consumption of the terminal in the second state, wherein
the first condition comprises at least one of the following:
the terminal receives a wake-up signal or an activation signal, and the wake-up signal or the activation signal is used to instruct the terminal to switch from the first state to the second state or exit from the first state;
the terminal does not receive a wake-up signal or an activation signal within first preset duration;
a preset cycle or a timer expires;
a type of the terminal changes;
a state of the terminal changes;
an attribute of the terminal changes;
a scenario of the terminal changes;
the terminal determines based on a preset rule that the terminal moves;
the terminal determines based on internal implementation that the terminal moves;
the terminal determines based on the internal implementation that it is necessary to switch from the first state to the second state;
an area in which the terminal is located changes;
the terminal receives a system information change instruction;
the terminal receives a reference signal change instruction;
received signal quality of the terminal is higher than a first threshold;
a variable quantity of the received signal quality of the terminal is lower than a second threshold;
the received signal quality of the terminal is lower than a third threshold; and
the variable quantity of the received signal quality of the terminal is higher than a fourth threshold.

16. The apparatus according to claim 15, wherein the apparatus further comprises:
a determining module, configured to: when a second condition is met, determine that the area in which the terminal is located changes, wherein the second condition comprises at least one of the following:
area information corresponding to the area in which the terminal is located is changed;
the terminal does not receive the area information corresponding to the area in which the terminal is located;
the type of the terminal changes;
the attribute of the terminal changes;
the scenario of the terminal changes;
the state of the terminal changes; and
the terminal determines based on the internal implementation that the terminal moves.

17. The apparatus according to claim 16, wherein the determining module comprises:
a determining submodule, configured to: if the second condition is met within second preset duration, determine that the area in which the terminal is located changes, wherein the second preset duration is specified by a protocol or configured by a network.

18. The apparatus according to claim 15, wherein when the first condition comprises that the terminal receives the wake-up signal or the activation signal, or the terminal does not receive the wake-up signal or the activation signal within the first preset duration, the apparatus further comprises:
a configuration receiving module, configured to: before the terminal enters the first state, receive configuration information sent by a network side device, wherein the configuration information is used to configure the terminal to monitor a relevant parameter of the wake-up signal or the activation signal.

19. The apparatus according to claim 15, wherein after the terminal switches from the first state to the second state, the apparatus further comprises at least one of the following:
a first sending module, configured to send first indication information to a first communications device, wherein the first indication information is used to instruct the terminal to switch from the first state to the second state, or the first indication information is used to instruct the terminal to enter the second state;
a first receiving module, configured to receive a synchronization signal;
a second receiving module, configured to receive a reference signal;
a third receiving module, configured to receive a system message; and
a monitoring module, configured to monitor a paging message.

20. The apparatus according to claim 19, wherein the first sending module comprises:
a first sending submodule, configured to send the first indication information to the first communications device in a first manner, wherein the first manner comprises at least one of the following:
sending the first indication information in a random access procedure;
sending a sounding reference signal carrying the first indication information;
sending an uplink scheduling request carrying the first indication information;
sending a buffer status report comprising the first indication information;
sending an uplink signal carrying the first indication information; and
sending the first indication information on an uplink channel.

21. The apparatus according to claim 19, wherein the first sending module comprises:
a second sending submodule, configured to: if the terminal switches to the second state based on a target condition in the first condition, send the first indication information to the first communications device; or
if the terminal switches to the second state based on other conditions than the target condition in the first condition, skip sending the first indication information to the first communications device, wherein
the target condition comprises one or more of the first condition specified by a protocol or configured by a network.

22. The apparatus according to claim 15, wherein the apparatus further comprises:
a maintain module, configured to maintain the second state;
or
a second switch module, configured to: when a fifth condition is met, switch to the first state.

23. The apparatus according to claim 22, wherein the apparatus further comprises:
a second sending module, configured to: before the terminal switches to the first state, send second indication information to the first communications device, wherein the second indication information is used to instruct the terminal to enter the first state or instruct the terminal to re-enter the first state or instruct the terminal to switch from the second state to the first state.

24. The apparatus according to claim 23, wherein the second sending module comprises:
a third sending submodule, configured to: before the terminal switches to the first state, send the second indication information to the first communications device in a second manner, wherein the second manner comprises at least one of the following:
sending the second indication information in a random access procedure;
sending a sounding reference signal carrying the second indication information;
sending an uplink scheduling request carrying the second indication information;
sending a buffer status report comprising the second indication information;
sending an uplink signal carrying the second indication information; and
sending the second indication information on an uplink channel.

25. The apparatus according to claim 22, wherein the maintaining module comprises:
a maintaining submodule, configured to: when a fourth condition is met, maintain the second state, wherein the fourth condition comprises at least one of the following:
it is determined based on terminal mobility that the terminal may move out of the area in which the terminal is located;
it is determined based on area information that the terminal may move out of the area in which the terminal is located;
the type of the terminal changes;
the attribute of the terminal changes;
the scenario of the terminal changes;
the state of the terminal changes; and
the terminal determines based on the internal implementation that the terminal moves.

26. The apparatus according to claim 25, wherein the maintaining submodule comprises:
a maintaining unit, configured to: if the fourth condition is met within third preset duration, maintain the second state, wherein the third preset duration is specified by a protocol or configured by a network.

27. The apparatus according to claim 22, wherein the fifth condition comprises at least one of the following:
it is determined based on terminal mobility that the terminal may not move out of the area in which the terminal is located;
it is determined based on area information that the terminal may not move out of the area in which the terminal is located;
the type of the terminal is fixed;
the attribute of the terminal is fixed;
the terminal is deployed in a fixed scenario;
the state of the terminal does not change; and
the terminal determines based on the internal implementation that the terminal does not move.

28. The apparatus according to claim 22, wherein the second switch module comprises:
a second switch submodule, configured to: if the fifth condition is met within fourth preset duration, switch to the first state, wherein the fourth preset duration is specified by a protocol or configured by a network.

29. A terminal, comprising a processor, a memory, and a program or an instruction stored in the memory and executable on the processor, wherein when the program or the instruction is executed by the processor, steps of the terminal state switch method according to any one of claims 1 to 14 are implemented.

30. A readable storage medium, wherein the readable storage medium stores a program or an instruction, and when the program or the instruction is executed by a processor, steps of the terminal state switch method according to any one of claims 1 to 14 are implemented.

31. A chip, comprising a processor and a communications interface, wherein the communications interface is coupled to the processor, and the processor is configured to run a program or an instruction, to implement steps of the method according to any one of claims 1 to 14.

32. A computer program product, wherein the computer program product is stored in a non-volatile storage medium, and the computer program product is executed by at least one processor to implement steps of the method according to any one of claims 1 to 14.

33. An electronic device, configured to implement steps of the method according to any one of claims 1 to 14.
